(19) Europäisches Patentamt / European Patent Office / Office européen des brevets

(11) **EP 3 007 425 A1**

(12) **EUROPEAN PATENT APPLICATION**

(43) Date of publication:
**13.04.2016 Bulletin 2016/15**

(51) Int Cl.:
**H04N 5/21** (2006.01)   **H04N 5/253** (2006.01)
**H04N 1/409** (2006.01)

(21) Application number: **14306576.1**

(22) Date of filing: **08.10.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Thomson Licensing
92130 Issy-les-Moulineaux (FR)**

(72) Inventor: **Theis, Oliver
32689 Kalletal (DE)**

(74) Representative: **Rittner, Karsten
Deutsche Thomson OHG
European Patent Operations
Karl-Wiechert-Allee 74
30625 Hannover (DE)**

(54) **Method and apparatus for detecting defects in digitized image sequences**

(57)    Dirt or other non-steady defects are detected in a frame of a sequence of digitized image frames. No determination of motion vectors for motion compensation is required. Instead, absolute motion values for a plurality of pixels of the frame relative to a preceding frame and to a succeeding frame of the sequence are determined (101). Based on the assumption that motion is usually smooth in the sequence, temporal coherence violations between the frame and the preceding frame and between the frame and the succeeding frame are detected (102) for the pixels, depending on the absolute motion values. Pixels of the plurality of pixels are determined (103) as defective if corresponding temporal coherence violations are detected between the frame and the preceding frame and the succeeding frame.

100

101

Determine absolute motion values, backward and forward

102

Detect temporal coherence violations, backward and forward

103

Determine defective pixel(s)

Fig. 1

EP 3 007 425 A1

**Description**

**FIELD**

A method and an apparatus for detecting defects in digitized image sequences are presented. In particular, the present disclosure relates to a method and an apparatus for detecting defects in a frame of a sequence of digitized image frames, and to a corresponding computer readable storage medium.

**BACKGROUND**

Motion picture films are often affected by defects, i.e. undesirable objects such as scratches, dust, dirt, stains, abrasion and some more. They usually originate from the technical process of developing, handling, storing, and screening or scanning the material. In some rare cases static objects may already be induced during capturing, for example fluff within a lens or dirt on a scanner glass. However, a very common defect is non-steady dirt, i.e. undesired objects that appear only for a single frame.

For archival and conservation purposes and for making use of the benefits of a digital representation, analogue motion picture films are scanned and digitally encoded. Restoration of the films can, therefore, be carried out in the digital domain after scanning. Instead of time consuming manual restoration of the digitized films by finding and removing each object, application of automatic restoration software with algorithms trying to detect and remove dirt objects is a cost saving alternative to manual workflow.

One task with automatic dirt removal is to reliably discriminate dirt from moving objects.

The problem has been addressed by A. C. Kokaram in his Ph.D. thesis "Motion Picture Restoration", Cambridge University, England, 1993. He proposed to perform motion compensation prior to dirt detection and developed a temporal spike detector (SDI). Since then, motion compensation, e.g. by hierarchical block matching, has been accepted as a preprocessing step before dirt detection. Research on dirt detection, therefore, concentrated on building new or improving existing detector designs.

In 1996, M.J. Nadenau and S.K. Mitra published an algorithm based on the rank order difference (ROD) in their paper "Blotch and Scratch Detection in Image Sequences based on Rank Ordered Differences", Proc. of 5th Int. Workshop on Time-Varying Image Processing.

In 1999, P. M. B. Van Roosmalen proposed a simplification of the ROD named sROD in "Restoration of archived film and video", Ph.D. thesis, Delft University of Technology. He also noticed that motion estimation often fails in case of dirt and proposed techniques for motion vector repair.

This was also noticed by J. Ren and T. Vlachos in "Segmentation-Assisted Detection of Dirt Impairments in Archived Film Sequences" (2007), IEEE Transactions on Systems Man and Cybernetics Part B (Cybernetics), who proposed a confidence measure to detect false alarms together with a segmentation-based approach to identify dirt structures. 2010 they reviewed their results in "Detection of dirt impairments from archived film sequences: survey and evaluation".

Another contribution in this field was provided in 2010 by A. Buades, J. D. Deon, S. Masnou in "Adaptive blotches detection for film restoration", Proceedings of 2010 IEEE 17th International Conference on Image Processing. They described an adaptive spike detector (ASDI), which also requires motion compensated input.

Motion vector estimation prior to detection is also a main aspect of WO9937087A1 "Moving image restoration" by T. Vlachos, Van Roosmalen and Kokaram.

However, these approaches are either computationally intensive, for example because of the processing step of motion vector estimation and motion compensation, or computation effort is reduced at the cost of less correct detection.

Particularly, motion vector estimation can be considered notoriously erroneous at locations of temporal incoherence, as shown in "Statistical Analysis of Pathological Motion Areas", A. Rares, Proceedings of the IEE Seminar on Digital Restoration of Film and Video Archives, January 16, 2001, London, UK.

There remains a need for a method and an apparatus for automatically detecting size and location of non-steady undesired objects, shortly referred to as "dirt", in digitized film sequences efficiently and accurately.

**SUMMARY**

A method and an apparatus for detecting defects in frames of a sequence of digitized image frames are suggested, as well as a computer readable storage medium.

According to an aspect of the invention, a method for detecting defects in a frame of a sequence of digitized image frames comprises

- determining absolute motion values for a plurality of pixels of the frame relative to a preceding frame and to a succeeding frame of the sequence;
- for the plurality of pixels, detecting temporal coherence violations between the frame and the preceding frame and between the frame and the succeeding frame depending on said absolute motion values; and
- determining at least one pixel of the plurality of pixels as defective if corresponding temporal coherence violations are detected between the frame and the preceding frame and the succeeding frame.

Accordingly, an apparatus for detecting defects in a frame of a sequence of digitized image frames comprises

- an input configured to receive frames of the sequence of digitized image frames;
- a motion determination unit configured to determine absolute motion values for a plurality of pixels of the frame relative to a preceding frame and to a succeeding frame of the sequence;
- a temporal coherence detection unit configured to detect for the plurality of pixels temporal coherence violations between the frame and the preceding frame and between the frame and the succeeding frame depending on said absolute motion values; and
- a defect detection unit configured to determine at least one pixel of the plurality of pixels as defective if it detects corresponding temporal coherence violations between the frame and the preceding frame and the succeeding frame.

Units comprised in the apparatus, such as the motion determination unit, the temporal coherence detection unit and the defect detection unit may, for example, be provided as separate devices, jointly as at least one device or logic circuitry, or functionality carried out by a microprocessor, microcontroller or other processing device, computer or other programmable apparatus.
According to an aspect of the invention, an apparatus for detecting defects in a frame of a sequence of digitized image frames comprises

- a processing device and
- a memory device storing instructions that, when executed, cause the apparatus to perform the described method steps.

Further, a computer readable storage medium has stored therein instructions enabling detection of defects in a frame of a sequence of digitized image frames, which, when executed by a computer, cause the computer to:

- determine absolute motion values for a plurality of pixels of the frame relative to a preceding frame and to a succeeding frame of the sequence;
- for the plurality of pixels, detect temporal coherence violations between the frame and the preceding frame and between the frame and the succeeding frame depending on said absolute motion values; and
- determine at least one pixel of the plurality of pixels as defective if corresponding temporal coherence violations are detected between the frame and the preceding frame and the succeeding frame.

The computer readable storage medium tangibly embodies a program of instructions, which, when executed by a computer, cause the computer to perform the described method steps.
In an embodiment the terms "preceding frame" and "succeeding frame" refer to the neighboring frames of the frame receiving the defect detection processing. In another embodiment at least one of the "preceding frame" and the "succeeding frame" can be a frame of the sequence before or after the frame without directly neighboring said frame.
For the solution, it is expected that non-steady dirt objects of a certain size often appear only within a single frame, and, therefore, affect temporal coherence, i.e. it is assumed that motion flow in natural image sequences is usually smooth.
The solution according to the aspects of the invention allows omitting estimation of motion vectors and motion compensation, as it only relies on a determination of absolute motion values. These could be derived as vector norms from calculated motion vector fields, but, as no motion direction information is used, can more efficiently be derived from faster, less complex computations. A motion adaptive workflow for detecting dirt comprising three main processing stages is as follows:

1. Estimate absolute motion values of each pixel within a frame relative to the frames before and after.
2. Check temporal coherence violations by detecting the pixels outside a displacement radius determined by the determined absolute motion values in the frames before and after.
3. Define pixels violating forward and also backward temporal coherence as defective or as showing dirt.

The provided solution at least has the effect that information on location, size and shape of dirt within a frame can be provided. Since the invention omits dependence on traditional computational demanding motion vector estimation that is notoriously erroneous at locations of temporal incoherence, the defect detection can be less complex, while, at the same time, provide high detection ratios.

Although the defect detection solution allows non-steady dirt detection, where dirt is defined as a certain type of temporal incoherence, it is also applicable, e.g., to footage without dirt, for example directly captured by digital video cameras, for detection of temporal incoherences.

In an embodiment the detecting of temporal coherence violations comprises

- for the plurality of pixels, determining corresponding displacement radii depending on said absolute motion values; and

- detecting at least one pixel of the plurality of pixels that cannot be found displaced within the corresponding displacement radius in at least one of the preceding frame and the succeeding frame as a temporal coherence violation. Each pixel has a corresponding displacement radius determined by the absolute motion value calculated for the pixel, either determined between the frame and the preceding frame or between the frame and the succeeding frame. Depending on the format of the determined absolute motion values, a corresponding displacement radius may, for example, be identical to the absolute motion value, or may be derived from it by a mathematical operation.

In an example embodiment the corresponding displacement radii are determined depending on said absolute motion values and multiplied by a factor below 1. This may increase the defect detection ratio.

In an embodiment corresponding absolute motion values between the preceding frame and the succeeding frame are determined for the plurality of pixels; and at least one of the corresponding displacement radii is determined depending on a minimum of the absolute motion value for the pixel of the frame relative to the preceding frame or the succeeding frame and the corresponding absolute motion value between the preceding and the succeeding frame. Here, absolute motion values are determined not only between the frame and the preceding frame and between the frame and the succeeding frame, but also between the preceding frame and the succeeding frame. Assuming that motion in the image sequence is usually smooth, motion values between the frame and its preceding and succeeding frame are replaced by the overall motion detectable between the preceding and the succeeding frame in case of an incoherently high single frame motion peak. This increases reliability of the coherence violation detection result for the particular pixel.

In an embodiment the at least one pixel cannot be found displaced within the corresponding displacement radius in at least one of the preceding frame and the succeeding frame if, for none of the pixels in the preceding frame or the succeeding frame within the corresponding displacement radius, a distance measure between a pixel value of said at least one pixel and a value of any of the pixels in the preceding frame or in the succeeding frame within the corresponding displacement radius is below a threshold. In other words, a backward displacement radius determines a search area in the preceding frame and a forward displacement radius determines a search area in the succeeding frame. The threshold divides the search area into a region of acceptable coherence and another region of coherence violation. The distance measure may, for example, be a Euclidian distance. However, other distance measures may be used instead. The threshold can be selected, for example, depending on a demanded defect detection ratio. The lower the threshold is set, the higher the detection ratio at the cost of an increasing misdetection ratio.

In an embodiment the detecting of temporal coherence violations and the determining of at least one pixel of the plurality of pixels as defective are performed iteratively, wherein the corresponding displacement radii are set to smaller values with each iteration. This produces a set of potentially differing results of detected temporal coherence violations, wherein the reduction of applied displacement radii potentially results in increasing coherence violation detection ratios. In this context, a "smaller value" refers to a value smaller than the one used in the preceding iteration. As an example, with each iteration, the previously determined radius is multiplied by a predefined factor smaller than 1.

In another embodiment the detecting of temporal coherence violations and the determining of at least one pixel of the plurality of pixels as defective are performed iteratively, wherein the threshold is increased with each iteration.

For example, the detecting of temporal coherence violations and the determining of at least one pixel of the plurality of pixels as defective can be performed twice. The idea is to carry out dirt detection twice with two different search window radii. In the second iteration the method is modified such that the backward and forward search radius is significantly reduced, resulting in a much higher detection ratio. In other words, for the first pass, i.e. iteration, the threshold is set conservatively, i.e. to enable a low detection rate, in order to prevent misdetections. However, defects may probably only be detected partly in this iteration. For the second iteration a more relaxed threshold is chosen, resulting in more detections and better shape recovery, but increased misdetection rate.

Afterwards, only regions of the second iteration are selected that are confirmed by the first one. For example, in an embodiment where the detecting of temporal coherence violations and the determining of at least one pixel of the plurality of pixels as defective are performed iteratively, the determining of at least one pixel of the plurality of pixels as defective for an iteration further comprises determining at least one subset of said at least one pixel and determining the one or more pixels of the subset as defective only if in the previous iteration at least one corresponding pixel has been determined as defective. In this context, a subset of a single pixel is the pixel itself, whereas otherwise a subset consists of pixels adjacent or in close proximity to each other. A pixel of the previous iteration that corresponds to the subset is a pixel that overlaps with the subset.

Besides finding dirt or defective objects at the right position, estimating the correct shape improves the detection result. In an example embodiment the determining of at least one subset comprises performing a morphological reconstruction of the at least one subset. In the embodiment the morphological reconstruction may, for example, comprise dilation, closing and filling or combinations thereof to better identify potentially connected defective regions, e.g. dirt. In other words, the subset is changed by morphological operations before the confirmation by a corresponding potentially defective pixel, i.e. a pixel determined during the previous iteration and overlapping with the subset, is checked. Only those regions or subsets of the last iteration are selected as identified defective that are confirmed by the preceding iteration, whereas others are removed.

While not explicitly described, the present embodiments may be employed in any combination or sub-combination.

**BRIEF DESCRIPTION OF THE DRAWINGS**

Fig. 1     schematically illustrates a method for detecting defects in a frame of a sequence of digitized image frames according to an embodiment of the invention;

Fig. 2     schematically illustrates a method for detecting defects in a frame of a sequence of digitized image frames according to another embodiment of the invention;

Fig. 3     schematically illustrates a method for detecting defects in a frame of a sequence of digitized image frames according to another embodiment of the invention;

Fig. 4     schematically illustrates a method for detecting defects in a frame of a sequence of digitized image frames according to yet another embodiment of the invention;

Fig. 5     schematically illustrates an apparatus for detecting defects in a frame of a sequence of digitized image frames according to an embodiment of the invention;

Fig. 6     schematically illustrates an apparatus for detecting defects in the frame of a sequence of digitized image frames according to another embodiment of the invention; and

Fig. 7     schematically illustrates an apparatus for detecting defects in the frame of a sequence of digitized image frames according to yet another embodiment of the invention.

**DETAILED DESCRIPTION OF EMBODIMENTS**

For a better understanding, the invention will now be explained in more detail in the following description with reference to the drawings. It is understood that the invention is not limited to these exemplary embodiments and that specified features can also expediently be combined and/or modified without departing from the scope of the present invention as defined in the appended claims.

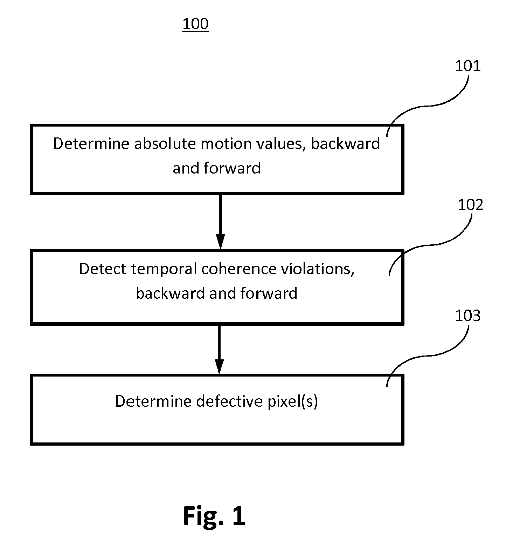

Referring to Fig. 1, a method 100 for detecting defects in a frame of a sequence of digitized image frames according to an embodiment of the invention is schematically shown. The method is suitable for automatic detection of non-steady dirt objects in digitized film sequences. The shown embodiment of the method 100 has been designed to allow defect or dirt detection independent of estimation of motion vectors.

In a first step 101 absolute motion values for a plurality of pixels of the frame are determined relative to a preceding frame and to a succeeding frame of the sequence. In other words, an array of forward absolute motion values and an array of backward absolute motion values are determined.

In a second step 102 temporal coherence violations for the plurality of pixels are detected between the frame and the preceding frame and between the frame and the succeeding frame depending on said absolute motion values.

In a third step 103 at least one pixel of the plurality of pixels is determined as defective if corresponding temporal coherence violations are detected between the frame and the preceding frame and the succeeding frame.

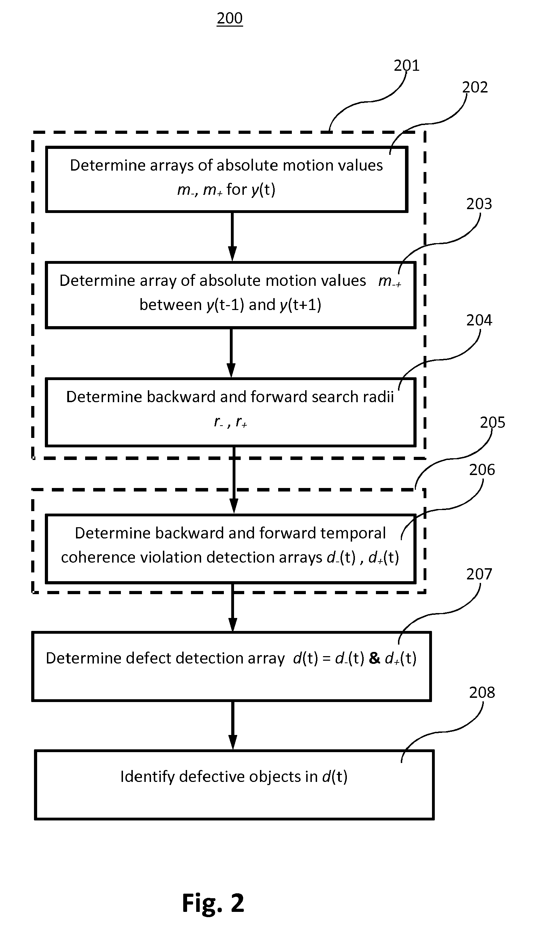

Referring to Fig. 2, a method 200 for detecting defects in a frame of a sequence of digitized image frames according to another embodiment of the invention is schematically shown. The shown method comprises estimating an array of absolute motion values m between different combinations of frames. The method for determining the values is referred to as M in the following. M may be any method for calculating absolute motion values. However, as no motion vector phase is evaluated, a method that allows direct calculation of absolute motion values could efficiently be used instead of a method that requires prior calculation of motion vector arrays to determine vector norms from, since motion vector estimation algorithms often rely on the assumption of temporal coherence and tend to fail if temporal coherence is violated.

Here, it is assumed that each frame with temporal index t has a single channel representation y(t), e.g. luma or luminance information.

In the shown embodiment a frame y(t) is compared to a motion compensated representation of a preceding frame y(t-1) and/or a succeeding frame y(t+1) under a certain threshold. As described in the background section, different methods like SDI, ROD, and sROD have been proposed for similar comparisons. However, they all depend on the quality of the preceding motion vector estimation.

Here, a binary mask d(t) (matte) is generated from those pixels of y(t) that cannot be found in the frame before or after within a certain displacement radius, i.e. search radius, which has been determined before for each pixel:

In a first processing stage 201, a backward and a forward displacement radius, i.e. search radius, are determined for each pixel.

In a first step 202 of stage 201, for the pixels of the current frame y(t), arrays of absolute motion values $m_-$ and $m_+$ of the current frame to the preceding, i.e. backward, and the succeeding, i.e. forward, frames are determined:

$$m_- = \mathrm{M}(y(\mathrm{t}),y(\mathrm{t-1})), \quad m_+ = \mathrm{M}(y(\mathrm{t}),y(\mathrm{t+1}))$$

In a second step 203 absolute motion values between backward and forward frames are determined: $m_{-+} = \mathrm{M}(y(\mathrm{t-1}),y(\mathrm{t+1}))$

In a third step 204 the backward and the forward displacement radii, i.e. search radii, are determined:

$$r_- = \min(m_-, \ m_{-+}), \quad r_+ = \min(m_+, \ m_{-+})$$

In a next processing stage 205 forward and backward temporal coherence violations are detected for each pixel. In other words, in a fourth step 206 those pixels in $y(\mathrm{t})$ are detected in the frames before and after that cannot be found within an Euclidian distance for a given threshold T within the corresponding search radius.

In the shown embodiment the fourth processing step 206 comprises building the backward detection mask $d_-(\mathrm{t})$ and forward detection mask $d_+(\mathrm{t})$ by evaluating

$d_-(\mathrm{h, v, t}) = \sim \mathrm{any}((y(\mathrm{h,v,t})-y(\mathrm{h}-r_-(\mathrm{h,v,t}) : \mathrm{h}+r_-(\mathrm{h,v,t}), \mathrm{v}-r_-(\mathrm{h,v,t}): \mathrm{v}+r_-(\mathrm{h,v,t}),\mathrm{t-1}))^2 < \mathrm{T})$, and

$d_+(\mathrm{h, v, t}) - \sim\mathrm{any}((y(\mathrm{h, v, t})-y(\mathrm{h}-r_+(\mathrm{h, v, t}) : \mathrm{h}+r_+(\mathrm{h,v,t}), \mathrm{v}-r_+(\mathrm{h,v,t}): \mathrm{v}+r_+(\mathrm{h,v,t}),\mathrm{t+1}))^2 < \mathrm{T})$

for each pixel of $y(\mathrm{t})$ with horizontal index h and vertical index v. (Colon notation denotes 'from:to' and '~' denotes NOT)

In a next processing stage 207 it is checked if temporal coherence violations have been detected in the forward and also in the backward direction for obtaining the defect- or dirt-detection mask d(t):

$$d(\mathrm{t}) = d_-(\mathrm{t}) \ \& \ d_+(\mathrm{t})$$

At this point detection on pixel level is finished. d(t) contains indications of dirt detected at the corresponding pixel locations.

In an additional processing stage 208 connected-pixel defects indicating dirt objects are identified. Further, position, size and shape of the objects are determined. In an embodiment a rectangular bounding box is generated for each object, and its position, width and height are stored, for example together with a binary mask describing its shape, as generated metadata.

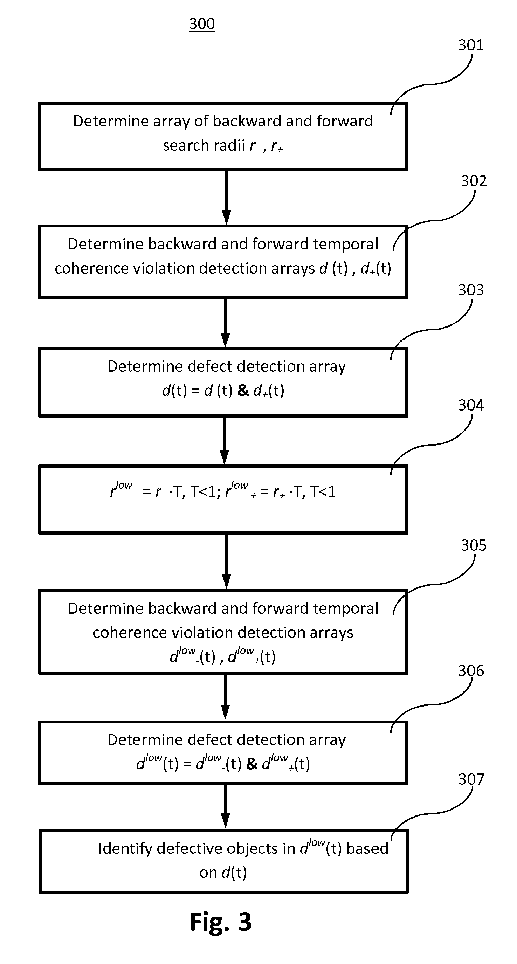

Referring to Fig. 3, a method 300 for detecting defects in a frame of a sequence of digitized image frames according to another embodiment of the invention is schematically shown.

A higher detection ratio for the shape of dirt objects can be achieved if the search window radius r is deliberately set lower than necessary. But this will also result in an increased amount of misdetection, i.e. a higher false positive detection ratio. This observation is utilized and combined with the idea of using two different thresholds:

At first, dirt detection is performed using processing stages 301, 302, 303, which correspond to respective processing stages 201, 205, 207 as shown in Fig. 2.

In a first processing stage 301, a backward and a forward displacement radius, i.e. search radius, are determined for each pixel. In a next processing stage 302 forward and backward temporal coherence violations are detected for each pixel. In a next processing stage 303 it is checked if temporal coherence violations have been detected in the forward and also in the backward direction for obtaining the defect- or dirt-detection mask d(t).
In a next processing stage 304 the search radii are reduced by multiplication with a factor below 1:

$$r^{low}_- = r_- \bullet T \quad \text{with } T < 1$$

$$r^{low}_+ = r_+ \bullet T \quad \text{with } T < 1$$

Afterwards, processing stages 305 and 306 corresponding to respective processing stages 302 and 303 are performed to generate defect- or dirt-detection mask $d^{low}(t)$ instead of $d(t)$.
In a next processing stage 307 defective objects in $d^{low}$ are identified based on $d(t)$. For example, a binary morphological reconstruction binrecon() of mask $d^{low}$ is performed with marker $d$, i.e. continuous areas or subsets of $d^{low}$ which are not backed up by at least one element in $d$ with the same area are removed. This results in a detection mask $d^{complete}$ where shapes of dirt are more completely resolved:

$$d^{complete} = \text{binrecon}(d^{low}, d)$$

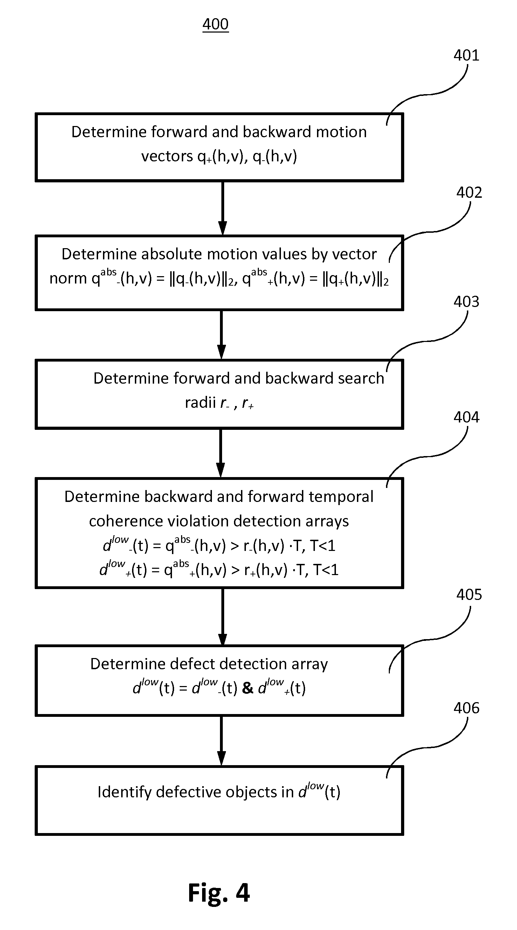

Referring to Fig. 4, a method 400 for detecting defects in a frame of a sequence of digitized image frames according to yet another embodiment of the invention is schematically shown.
In this embodiment, displacement vectors indicating where a pixel has actually been found are stored for both directions, i.e. forward and backward. In the shown embodiment detection of temporal coherence violations is run only once while the detection result remains similarly accurate. The displacement radii are compared to reduced search window radii resulting in a detection mask with more elements.
In a first processing stage 401 an array of forward and backward motion vectors $q_+(h,v)$ and $q_-(h,v)$ are determined.
In a second processing stage 402 the motion vector arrays are transformed into absolute motion values, i.e. the length of each motion vector is computed by applying the Euclidian norm:

$$q^{abs}_-(h,v) = || q_-(h,v) ||_2, \quad q^{abs}_+(h,v) = || q_+(h,v) ||_2$$

In a third processing stage 403 forward and backward search radii $r_-$, $r_+$ are determined.
In a fourth processing stage 404 backward and forward coherence violation detection arrays are determined, i.e. masks $d^{low}_-$ and $d^{low}+$ where absolute forward and backward motion is greater than a certain threshold which is lower than the forward and backward search radii $r_-$ and $r_+$:

$$d^{low}_-(h,v) = q^{abs}_-(h,v) > r_-(h,v) \bullet T \quad \text{with } T < 1$$

$$d^{low}_+(h,v) = q^{abs}_+(h,v) > r_+(h,v) \bullet T \quad \text{with } T < 1$$

In a fifth processing stage 405 a defect detection array $d^{1ow}$ is determined by combining masks $d^{low}_-$ and $d^{low}_+$:

$$d^{low} = d^{low}_- \ \& \ d^{low}_+$$

In a sixth processing stage 406 defective objects in $d^{low}$ are identified. For example, a binary morphological reconstruction binrecon ( ) of mask $d^{low}$ is performed, for example using a marker d. This results in a detection mask $d^{complete}$ where shapes of dirt are more completely resolved.

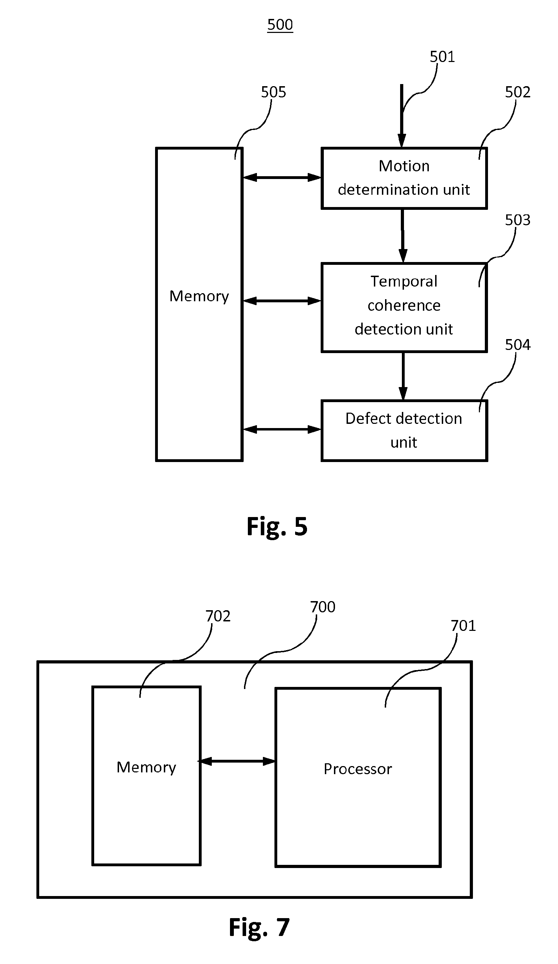

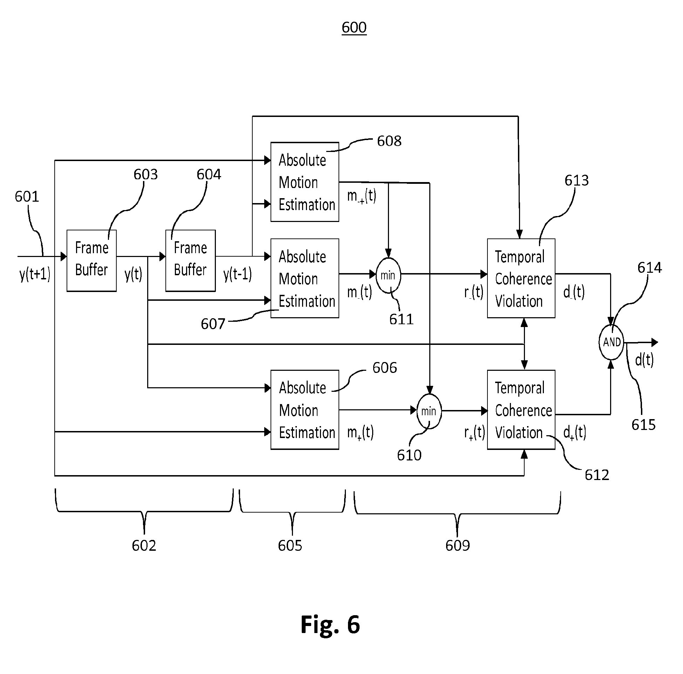

Referring now to Fig. 5, Fig. 6 and Fig. 7, apparatuses for detecting defects in a frame of a sequence of digitized image frames according to embodiments of the invention are schematically shown. The apparatus shown in Fig. 5, the apparatus shown in Fig. 6 and the apparatus shown in Fig. 7 allow implementing the advantages and characteristics of the described method for detecting defects in a frame as part of an apparatus for detecting defects in a frame of a sequence of digitized image frames.

The apparatus 500 shown in Fig. 5 comprises an input 501 for receiving frames of the sequence of digitized image frames and a motion determination unit 502 configured to determine absolute motion values for a plurality of pixels of the frame relative to a preceding frame and to a succeeding frame of the sequence. The motion determination unit 502 may, for example, determine all required absolute motion values or may consist of separate units dedicated to determine, for example, the backward motion values and the forward motion values, respectively.

The apparatus 500 further comprises a temporal coherence detection unit 503 configured to detect for the plurality of pixels temporal coherence violations between the frame and the preceding frame and between the frame and the succeeding frame depending on said absolute motion values.

Furthermore, the apparatus 500 comprises a defect detection unit 504 configured to determine at least one pixel of the plurality of pixels as defective if it detects corresponding temporal coherence violations between the frame and the preceding frame and the succeeding frame.

The shown apparatus 500 further comprises at least one memory 505 arranged to at least temporarily store or buffer, e.g., frames of the image sequence, as well as other values calculated during the subsequent processing, such as absolute motion values and temporal coherence violations. In another embodiment, the apparatus 500 does not contain the memory 505 but is connected or connectable to the memory by means of an interface.

In the embodiment shown in Fig. 5 the motion determination unit 502, the temporal coherence detection unit 503 and the defect detection unit 504 directly communicate with each other. In another embodiment the apparatus comprises a controller unit connected at least to one or more of the motion determination unit 502, the temporal coherence detection unit 503 and the defect detection unit 504 and controls their communication.

In the shown embodiment the memory 505 is connected to the motion determination unit 502, the temporal coherence detection unit 503 and the defect determination unit 504. In other embodiments some all of the units are indirectly connected to the memory or the memory is provided as a plurality of separate memory devices.

Referring now to Fig. 6, an apparatus 600 for detecting defects in a frame of a sequence of digitized image frames according to another embodiment of the invention is schematically shown. The apparatus 600 shown in Fig. 6 has an input 601 for receiving frames of the sequence of digitized image frames. The memory unit 602 comprises a first frame buffer 603 and a second frame buffer 604. The motion determination unit 605 consists of a first absolute motion estimation unit 606, a second absolute motion estimation unit 607 and a third absolute motion estimation unit 608. The temporal coherence detection unit 609 comprises a first minimum determination unit 610, a second minimum determination unit 611, a first temporal coherence violation detection unit 612 and a second temporal coherence violation detection unit 613. The defect detection unit comprises an AND-gate or other AND-determination unit 614.

The input 601 is connected to provide a received frame, for example as shown frame y(t+1), to the first frame buffer 603, the first absolute motion estimation unit 606, the third absolute motion estimation unit 608 and the first temporal coherence violation detection unit 612.

The first frame buffer 603 is connected to provide a previously buffered frame of the sequence, y(t) in the shown example, to the second frame buffer 604, the first absolute motion estimation unit 606, the second absolute motion estimation unit 607, the first temporal coherence violation detection unit 612 and the second temporal coherence violation detection unit 613. The second frame buffer 604 is connected to provide a previously buffered frame of the sequence, y(t-1) in the shown example, to the second absolute motion estimation unit 607, the third absolute motion estimation unit 608 and the second temporal coherence violation detection unit 613.

The first absolute motion estimation unit 606 is configured to determine forward absolute motion values $m_+(t)$ by evaluating $y(t)$ and $y(t+1)$ and to provide $m_+(t)$ to the first minimum determination unit 610. The second absolute motion estimation unit 607 is configured to determine backward absolute motion values $m_-(t)$ by evaluating $y(t)$ and $y(t-1)$ and to provide $m_-(t)$ to the second minimum determination unit 611. The third absolute motion estimation unit 608 is configured to determine absolute motion values $m_{-+}(t)$ between the preceding and the succeeding frame of $y(t)$ by evaluating $y(t-1)$ and $y(t+1)$ and to provide $m_{-+}(t)$ to the first minimum determination unit 610 and the second minimum determination unit 611.

The first minimum determination unit 610 is configured to determine the forward displacement radii or search radii $r_+(t)$ as the minimum of $m_+(t)$ and $m_{-+}(t)$ and to provide $r_+(t)$ to the first temporal coherence violation detection unit 612. The second minimum determination unit 611 is configured to determine the backward displacement radii or search radii $r_-(t)$ as the minimum of $m_-(t)$ and $m_{-+}(t)$ and to provide $r_-(t)$ to the second temporal coherence violation detection unit 613.

The first temporal coherence violation detection unit 612 is configured to determine a mask or array $d_+(t)$ of detected forward temporal coherence violations by evaluating $y(t)$ and $y(t+1)$ with respect to $r_+(t)$. The second temporal coherence violation detection unit 613 is configured to determine a mask or array $d_-(t)$ of detected backward temporal coherence violations by evaluating $y(t)$ and $y(t-1)$ with respect to $r_-(t)$.

The AND-determination unit 614 is configured to determine a mask or array $d(t)$ of detected defects by evaluating $d_+(t)$ and $d_-(t)$ and to provide the defect detection mask $d(t)$ to an output 615.

Units comprised in the embodiment of the apparatus shown in Fig. 5 and the embodiment of the apparatus shown in Fig. 6, may, for example, be provided as separate devices, jointly as at least one device or logic circuitry, or functionality carried out by a microprocessor, microcontroller or other processing device, computer or other programmable apparatus.

As shown in Fig. 7, according to an embodiment of the invention an apparatus 700 for detecting defects in a frame of a sequence of digitized image frames comprises a processing device 701 and a memory device 702 storing instructions that, when executed, cause the apparatus to perform steps according to one of the described methods.

For example, the processing device can be a processor adapted to perform the steps according to one of the described methods. In an embodiment said adaptation comprises that the processor is configured, i.e. for example programmed, to perform steps according to one of the described methods.

In an embodiment, the apparatus 500, 600 or 700 is a device being part of another apparatus or system, such as, for example, a video processing framework.

As will be appreciated by one skilled in the art, aspects of the present principles can be embodied as an apparatus, a system, method or computer readable medium. Accordingly, aspects of the present principles can take the form of a hardware embodiment, a software embodiment or an embodiment combining software and hardware aspects. Furthermore, aspects of the present principles can take the form of a computer readable storage medium. Any combination of one or more computer readable storage medium(s) may be utilized.

Aspects of the present principles may, for example, at least partly be implemented in a computer program comprising code portions for performing steps of the method according to an embodiment of the invention when run on a programmable apparatus or enabling a programmable apparatus to perform functions of an apparatus or system according to an embodiment of the invention.

Further, any shown connection may be a direct or an indirect connection. Furthermore, those skilled in the art will recognize that the boundaries between logic blocks are merely illustrative and that alternative embodiments may merge logic blocks or impose an alternate decomposition of functionality upon various logic blocks.

## Claims

1. Method (100) for detecting defects in a frame of a sequence of digitized image frames, **comprising**

   - determining (101) absolute motion values for a plurality of pixels of the frame relative to a preceding frame and to a succeeding frame of the sequence;
   - for the plurality of pixels, detecting (102) temporal coherence violations between the frame and the preceding frame and between the frame and the succeeding frame depending on said absolute motion values; and
   - determining (103) at least one pixel of the plurality of pixels as defective if corresponding temporal coherence violations are detected between the frame and the preceding frame and the succeeding frame.

2. Method according to claim 1, **wherein** the detecting (102) of temporal coherence violations comprises

   - for the plurality of pixels, determining corresponding displacement radii depending on said absolute motion values; and
   - detecting at least one pixel of the plurality of pixels that cannot be found displaced within the corresponding displacement radius in at least one of the preceding frame and the succeeding frame as a temporal coherence violation.

3. Method according to claim 2, **wherein** the corresponding displacement radii are determined depending on said absolute motion values and multiplied by a factor below 1.

**4.** Method according to claim 2 or claim 3, **further comprising**

- determining, for the plurality of pixels, corresponding absolute motion values between the preceding frame and the succeeding frame; and wherein at least one of the corresponding displacement radii is determined depending on a minimum of the absolute motion value for the pixel of the frame relative to the preceding frame or the succeeding frame and the corresponding absolute motion value between the preceding and the succeeding frame.

**5.** Method according to one of claims 2 to 4, **wherein** said at least one pixel cannot be found displaced within the corresponding displacement radius in at least one of the preceding frame and the succeeding frame if, for none of the pixels in the preceding frame or the succeeding frame within the corresponding displacement radius, a distance measure between a pixel value of said at least one pixel and a value of any of the pixels in the preceding frame or in the succeeding frame within the corresponding displacement radius is below a threshold.

**6.** Method according to one of claims 2 to 5, **comprising**

- iteratively performing the detecting of temporal coherence violations and the determining of at least one pixel of the plurality of pixels as defective, wherein the corresponding displacement radii are set to smaller values with each iteration.

**7.** Method according to claim 5, **comprising**

- iteratively performing the detecting of temporal coherence violations and the determining of at least one pixel of the plurality of pixels as defective, wherein the threshold is increased with each iteration.

**8.** Method according to claim 6 or claim 7, **wherein** the detecting (102) of temporal coherence violations and the determining (103) of at least one pixel of the plurality of pixels as defective are performed twice.

**9.** Method according to one of claims 6 to 8, **wherein**, for an iteration, the determining (103) of at least one pixel of the plurality of pixels as defective further comprises determining at least one subset of said at least one pixel and determining the one or more pixels of the subset as defective only if in a previous iteration at least one corresponding pixel has been determined as defective.

**10.** Method according to claim 9, **wherein** the determining of at least one subset comprises

- performing a morphological reconstruction of the at least one subset.

**11.** Apparatus (500) for detecting defects in a frame of a sequence of digitized image frames, **comprising**

- an input (501) configured to receive frames of the sequence of digitized image frames;
- a motion determination unit (502) configured to determine absolute motion values for a plurality of pixels of the frame relative to a preceding frame and to a succeeding frame of the sequence;
- a temporal coherence detection unit (503) configured to detect for the plurality of pixels temporal coherence violations between the frame and the preceding frame and between the frame and the succeeding frame depending on said absolute motion values; and
- a defect detection unit (504) configured to determine at least one pixel of the plurality of pixels as defective if it detects corresponding temporal coherence violations between the frame and the preceding frame and the succeeding frame.

**12.** Apparatus according to claim 11, **wherein** the temporal coherence detection unit (503) is configured to

- for the plurality of pixels, determine corresponding displacement radii depending on said absolute motion values; and
- detect at least one pixel of the plurality of pixels that cannot be found displaced within the corresponding displacement radius in at least one of the preceding frame and the succeeding frame as a temporal coherence violation.

**13.** Apparatus according to claim 12, **wherein**

- the motion determination unit (502) is further configured to determine, for the plurality of pixels, corresponding absolute motion values between the preceding frame and the succeeding frame; and
- the temporal coherence detection unit (503) is configured to determine at least one of the corresponding displacement radii depending on a minimum of the absolute motion value for the pixel of the frame relative to the preceding frame or the succeeding frame and the corresponding absolute motion value between the preceding and the succeeding frame.

14. Apparatus (700) for detecting defects in a frame of a sequence of digitized image frames, **comprising**

    - a processing device (701) and
    - a memory device (702) storing instructions that, when executed, cause the apparatus to perform the method steps according to one of claims 1 to 10.

15. Computer readable storage medium having stored therein instructions enabling detection of defects in a frame of a sequence of digitized image frames, which, when executed by a computer, cause the computer to:

    - determine (101) absolute motion values for a plurality of pixels of the frame relative to a preceding frame and to a succeeding frame of the sequence;
    - for the plurality of pixels, detect (102) temporal coherence violations between the frame and the preceding frame and between the frame and the succeeding frame depending on said absolute motion values; and
    - determine (103) at least one pixel of the plurality of pixels as defective if corresponding temporal coherence violations are detected between the frame and the preceding frame and the succeeding frame.

<u>100</u>

101

┌─────────────────────────────────────────┐
│  Determine absolute motion values, backward │
│              and forward                    │
└─────────────────────────────────────────┘

│
▼

102

┌─────────────────────────────────────────┐
│   Detect temporal coherence violations,    │
│           backward and forward             │
└─────────────────────────────────────────┘

│
▼

103

┌─────────────────────────────────────────┐
│         Determine defective pixel(s)        │
│                                             │
└─────────────────────────────────────────┘

## Fig. 1

<u>200</u>

**Fig. 2**

300

Determine array of backward and forward
search radii $r_-$ , $r_+$

301

Determine backward and forward temporal
coherence violation detection arrays $d_-(t)$ , $d_+(t)$

302

Determine defect detection array
$d(t) = d_-(t)$ **&** $d_+(t)$

303

$r^{low}_- = r_- \cdot T, \; T<1; \; r^{low}_+ = r_+ \cdot T, \; T<1$

304

Determine backward and forward temporal
coherence violation detection arrays
$d^{low}_-(t)$ , $d^{low}_+(t)$

305

Determine defect detection array
$d^{low}(t) = d^{low}_-(t)$ **&** $d^{low}_+(t)$

306

Identify defective objects in $d^{low}(t)$ based
on $d(t)$

307

**Fig. 3**

400

Determine forward and backward motion
vectors $q_+(h,v)$, $q_-(h,v)$

401

Determine absolute motion values by vector
norm $q^{abs}_-(h,v) = \|q_-(h,v)\|_2$, $q^{abs}_+(h,v) = \|q_+(h,v)\|_2$

402

Determine forward and backward search
radii $r_-$ , $r_+$

403

Determine backward and forward temporal
coherence violation detection arrays
$d^{low}_-(t) = q^{abs}_-(h,v) > r_-(h,v) \cdot T$, $T<1$
$d^{low}_+(t) = q^{abs}_+(h,v) > r_+(h,v) \cdot T$, $T<1$

404

Determine defect detection array
$d^{low}(t) = d^{low}_-(t)$ **&** $d^{low}_+(t)$

405

Identify defective objects in $d^{low}(t)$

406

# Fig. 4

500

501

505

502

Motion
determination unit

503

Memory

Temporal
coherence
detection unit

504

Defect detection
unit

**Fig. 5**

702

700

701

Memory

Processor

**Fig. 7**

Fig. 6

Europäisches
Patentamt

European
Patent Office

Office européen
des brevets

## EUROPEAN SEARCH REPORT

Application Number

EP 14 30 6576

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KOKARAM A C ET AL: "DETECTION OF MISSING DATA IN IMAGE SEQUENCES", IEEE TRANSACTIONS ON IMAGE PROCESSING, IEEE SERVICE CENTER, PISCATAWAY, NJ, US, vol. 4, no. 11, 2 November 1995 (1995-11-02), pages 1496-1508, XP000537923, ISSN: 1057-7149, DOI: 10.1109/83.469931 | 1-6,8-15 | INV. H04N5/21 H04N5/253 H04N1/409 |
| A | * section II, section IV * | 7 | |
| X | Peter Michael Van Roosmalen: "Restoration of Archived Film and Video", Thesis Delft University of Technology, 31 December 1999 (1999-12-31), XP055177494, Retrieved from the Internet: URL:http://msp.ewi.tudelft.nl/sites/defaul t/files/Restoration%20of%20Archived%20Film %20and%20Video%201999.pdf [retrieved on 2015-03-18] | 1-6,8-15 | |
| A | * section 4.2 * | 7 | |
| X | GB 2 333 413 A (SNELL & WILCOX LTD [GB]) 21 July 1999 (1999-07-21) | 1,2, 11-15 | |
| A | * page 6, line 20 - line 24; claim 1 * * page 8, line 2 - line 17 * | 3-10 | |

TECHNICAL FIELDS
SEARCHED        (IPC)

H04N

The present search report has been drawn up for all claims

| Place of search | Date of completion of the search | Examiner |
|---|---|---|
| Munich | 18 March 2015 | Trimeche, Mejdi |

**ANNEX TO THE EUROPEAN SEARCH REPORT
ON EUROPEAN PATENT APPLICATION NO.**

EP 14 30 6576

This annex lists the patent family members relating to the patent documents cited in the above-mentioned European search report.
The members are as contained in the European Patent Office EDP file on
The European Patent Office is in no way liable for these particulars which are merely given for the purpose of information.

18-03-2015

| Patent document cited in search report | | Publication date | Patent family member(s) | | Publication date |
|---|---|---|---|---|---|
| GB 2333413 | A | 21-07-1999 | EP | 1051842 A1 | 15-11-2000 |
| | | | GB | 2333413 A | 21-07-1999 |
| | | | WO | 9937087 A1 | 22-07-1999 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9937087 A1

### Non-patent literature cited in the description

- **A. C. KOKARAM.** Motion Picture Restoration. *Ph.D. thesis,* 1993
- **M.J. NADENAU ; S.K. MITRA.** Blotch and Scratch Detection in Image Sequences based on Rank Ordered Differences. *Proc. of 5th Int. Workshop on Time-Varying Image Processing,* 1996
- **P. M. B. VAN ROOSMALEN.** Restoration of archived film and video. *Ph.D. thesis,* 1999
- **J. REN ; T. VLACHOS.** Segmentation-Assisted Detection of Dirt Impairments in Archived Film Sequences. *IEEE Transactions on Systems Man and Cybernetics,* 2007
- **A. BUADES ; J. D. DEON ; S. MASNOU.** Adaptive blotches detection for film restoration. *Proceedings of 2010 IEEE 17th International Conference on Image Processing,* 2010
- **A. RARES.** Statistical Analysis of Pathological Motion Areas. *Proceedings of the IEE Seminar on Digital Restoration of Film and Video Archives,* 16 January 2001